# EUROPÄISCHE PATENTSCHRIFT

(11) **EP 1 683 952 B1**
(45) Veröffentlichungstag und Bekanntmachung des Hinweises auf die Patenterteilung: **20.08.2008**
(21) Anmeldenummer: 05027306.9
(22) Anmeldetag: 14.12.2005
(51) Int. Cl.: F02D 41/00, F02M 25/07

(54) **Verfahren und Vorrichtung zum Schutz temperaturempfindlicher Bauteile im Ansaugbereich eines Verbrennungsmotors mit Abgasrückführung**
Method and apparatus for protecting temperature sensitive components within the intake manifold of an internal combustion engine with EGR system
Procédé et appareil pour la protection des éléments sensible à la températur dans le collecteur d'admission d'un moteur à combustion interne avec recyclage des gaz d'échappement

(30) Priorität: 15.01.2005 DE 102005001961
(43) Veröffentlichungstag der Anmeldung: 26.07.2006
(73) Patentinhaber: AUDI AG, 85045 Ingolstadt (DE)
(72) Erfinder: Senft, Peter, 85092 Kösching (DE); Kuhn, Michael, 85080 Gaimersheim (DE); Sonner, Markus, 85092 Kösching (DE)
(74) Vertreter: Lehle, Josef

(56) Entgegenhaltungen:
- EP-A- 0 886 063
- DE-A1- 4 120 196
- DE-A1- 10 229 620
- DE-A1- 10 319 333
- DE-A1- 19 930 416
- DE-A1-1102004 030 27

## Beschreibung

Die Erfindung betrifft ein Verfahren und eine Vorrichtung zum Schutz temperaturempfindlicher Bauteile im Ansaugbereich eines Verbrennungsmotors mit Abgasrückführung für ein Kraftfahrzeug.

Moderne Verbrennungsmotoren, sowohl Otto- als auch Dieselmotoren, für den Einsatz in Kraftfahrzeugen sind zur Reduktion des Kraftstoffverbrauchs und der Abgasemissionen mit einer sogenannten Abgasrückführung ausgerüstet, bei der eine in Abhängigkeit von mehreren Motorparametern und gegebenenfalls auch Fahrzeugparametem, wie z. B. Druck und Temperatur des Gasgemisches aus Ansaugluft und rückgeführtem Abgas, Motortemperatur, Außentemperatur, Fahrgeschwindigkeit, Motordrehzahl, Motorlast, um nur einige Beispiele zu nennen, ermittelte Menge Abgas durch Rückführung in das Saugrohr eingespeist wird.

Die Menge des rückgeführten Abgases wird mittels Verstellung der Einlass- oder Auslassnockenwelle oder beider Nockenwellen eingestellt, welche die Einlass- und Auslassventile steuern. Durch das Verstellen der Einlass- und/oder Auslassnockenwelle wird Abgas während des Auslasstaktes zunächst in den Einlasskanal und das Saugrohr zurückgeschoben, um anschließend im folgenden Ansaugtakt wieder angesaugt zu werden.

Weil das Saugrohr mit heißen Abgasen beaufschlagt wird, kann es stark erhitzt werden. Je länger der Motor in Betrieb ist, desto höher steigt die Temperatur im Saugrohr und desto heißer wird es. Als Werkstoff für Saugrohre kommen daher nur temperaturresistente Materialien in Frage wie z. B. Metalllegierungen die jedoch mit dem Nachteil eines hohen Kaufpreises und eines großen Gewichts behaftet sind.

Um die Herstellungskosten eines Verbrennungsmotors mit Abgasrückführung zu senken, könnten anstelle von aus teuren temperaturresistenten Metalllegierungen hergestellten Saugrohren Saugrohre aus kostengünstigen Kunststoffen eingesetzt werden, die aber für die hohen bei einer Abgasrückführung im Saugrohr auftretenden Temperaturen nicht geeignet sind und die Gefahr einer Überhitzung des Werkstoffes mit sich bringen. Der Vorteil eines geringen Kraftstoffverbrauchs bedingt daher als Nachteil den Einsatz von Saugrohren aus teuren Werkstoffen z. B. besondere Metalllegierungen.

In DE 102 29 620 A1 ist ein Verfahren zur Bestimmung der Abgasrückführmengen für einen Verbrennungsmotor mit Abgasrückführung beschrieben. Aufgabe dieses bekannten Verfahrens ist es, mit relativ geringem Aufwand die Abgasrückführungen in unterschiedlichen Betriebszuständen des Motors und insbesondere auch bei variierenden Druck- und Temperaturverhältnissen des dem Motor zugeführten Gasgemisches stets genau und zuverlässig zu bestimmen. Bei diesem bekannten Verfahren wird in einem ersten Verfahrensschritt eine sogenannte Basismenge an Gasgemisch, das in die Brennkammer eingespeist wird, für wenigstens einen vorgebbaren Basiszustand des Verbrennungsmotors bei deaktivierter Abgasrückführung ermittelt. Für den jeweiligen Basiszustand wird eine Basistemperatur oder ein Basisdruck' ermittelt. Im Folgenden zweiten Verfahrensschritt wird im laufenden Motorbetrieb der Druck oder die Temperatur des eingespeisten Gasgemisches für den jeweils aktuellen Betriebszustand des Verbrennungsmotors bei aktivierter Abgasrückführung ermittelt, um daraus in einem dritten Verfahrensschritt die aktuell eingespeiste Gasgemischmenge zu ermitteln, die aus der aus dem Verhältnis des Basisdrucks zum aktuellen Druck oder der Basistemperatur zur aktuellen Temperatur korrigierten Basismenge bestimmt wird. Schließlich wird die Abgasrückführungsmenge in einem vierten Verfahrensschritt aus der Differenz der eingespeisten Gasgemischmenge und der Frischgasmenge berechnet.

Der Erfindung liegt die Aufgabe zugrunde, ein Verfahren und eine Vorrichtung anzugeben, das/die den Einsatz von kostengünstigen Bauteilen, insbesondere des Saugrohres, im Ansaugbereich eines Verbrennungsmotors mit Abgasrückführung bei optimalen Betriebsbedingungen gestattet.

Verfahrensmäßig wird diese Aufgabe mit den im Anspruch 1 angegebenen Merkmale dadurch gelöst, dass eine Temperaturmessung an mindestens einer vorgebbaren Stelle im Ansaugbereich erfolgt und/oder dass eine Berechnung der an mindestens einer vorgebbaren Stelle im Ansaugbereich herrschenden Temperatur mittels eines Rechenmodells durchgeführt wird, und dass die Menge des rückgeführten Abgases so eingestellt wird, dass die gemessene und/oder berechnete Temperatur an der vorgebbaren Stelle einen vorgebbaren Höchstwert nicht überschreitet.

Vorrichtungsmäßig wird diese Aufgabe mit den im Anspruch 8 angegebenen Merkmalen dadurch gelöst, dass ein Temperaturfühler zur Messung der Temperatur an mindestens einer vorgebbaren Stelle im Ansaugbereich angeordnet ist und/oder dass eine Recheneinheit zur Berechnung der an mindestens einer vorgebbaren Stelle im Ansaugbereich herrschenden Temperatur mittels eines Rechenmodells vorgesehen ist und dass die Menge des rückgeführten Abgases mittels einer Steuer- oder Regeleinrichtung so eingestellt ist, dass die gemessene oder berechnete Temperatur einen vorgebbaren Höchstwert nicht überschreitet.

Erfindungsgemäß wird die Menge des rückgeführten Abgases so eingestellt, dass einerseits ein möglichst geringer Kraftstoffverbrauch erzielt wird, andererseits aber die Grenztemperatur an der vorgebbaren Stelle im Ansaugbereich, vorzugsweise dort, wo die höchste Temperatur auftritt, keinesfalls überschritten wird. Durch diese erfindungsgemäße Maßnahme wird stets die für die jeweils an der vorgebbaren Stelle herrschende Temperatur höchstmögliche Reduktion des Kraftstoffverbrauchs erzielt. Erst wenn der vorgebbare Höchstwert der Temperatur an dieser Stelle im Ansaugbereich erreicht ist, wird die Abgasrückführung gedrosselt und auf ein solches Maß beschränkt, dass die Temperatur an der vorgebbaren Stelle den vorgebbaren Höchstwert nicht überschreitet. Vorzugsweise wird die Menge der rückgeführten Abgase so eingestellt, dass die Temperatur an der vorgebbaren Stelle auf den vorgebbaren Höchstwert geregelt wird.

Anstatt die Temperatur an der vorgebbaren Stelle im Ansaugbereich mittels eines Temperaturfühlers zu messen, kann sie auch mittels einer Recheneinheit aus den Messwerten eines oder mehrerer am Verbrennungsmotor und/oder am Kraftfahrzeug angeordneter Messfühler mittels eines Rechenmodells berechnet werden. In vorteilhafter Weise lassen sich für diese Messungen die ohnehin bei einem Verbrennungsmotor mit Abgasrückführung vorhandenen Messfühler nutzen. Ebenso vorteilhaft kann das bei einem Verbrennungsmotor ohnehin vorhandene Steuergerät zur Berechnung der Temperatur aus den von den Messfühlern gelieferten Messwerten genutzt werden. Diese von den Messfühlern erfassten und an das Steuergerät gelieferten Messwerte sind z. B. der Druck und die Temperatur des Gasgemisches aus Ansaugluft und rückgeführtem Abgas, die Motortemperatur, die Außentemperatur, die im Betriebspunkt gefahrene Restgasmenge, die Zeitdauer des Betriebspunktes, die Fahrgeschwindigkeit des Kraftfahrzeuges, die Motordrehzahl und/oder die Motorlast. Die erwähnte Berechnung kann auch ohne Messfühler erfolgen, wenn die im Steuergerät vorhandenen Parameter eine derartige Temperaturberechnung im Ansaugtrakt des Verbrennungsmotors gestatten.

Wie bereits erwähnt, ist es besonders vorteilhaft, ein Saugrohr aus einem kostengünstigen Kunststoff einzusetzen.

Als Stellglieder zur Festlegung der Menge des rückgeführten Abgases können z. B. die Einlass- und/oder die Auslassnockenwelle dienen. Wie bereits eingangs erwähnt, wird die Menge des rückgeführten Abgases mittels Verstellung der Einlass- oder Auslassnockenwelle oder beider Nockenwellen eingestellt, welche die Einlass- und Auslassventile steuern. Durch das Verstellen der Einlass- oder Auslassnockenwelle wird Abgas während des Auslasstaktes zunächst in den Einlasskanal und das Saugrohr zurückgeschoben, um anschließend im folgenden Ansaugtakt wieder angesaugt zu werden.

Ausführungsbeispiele und vorteilhafte Ausgestaltungen der Erfindung sind in den Unteransprüchen beschrieben.

Die Erfindung wird nun an Hand der in den Figuren gezeigten Ausführungsbeispiele näher beschrieben und erläutert.

In der Zeichnung zeigen:
- Figur 1: ein Prinzipbild eines ersten Ausführungsbeispiels der Erfindung und
- Figur 2: ein Prinzipbild eines zweiten Ausführungsbeispiels der Erfindung.

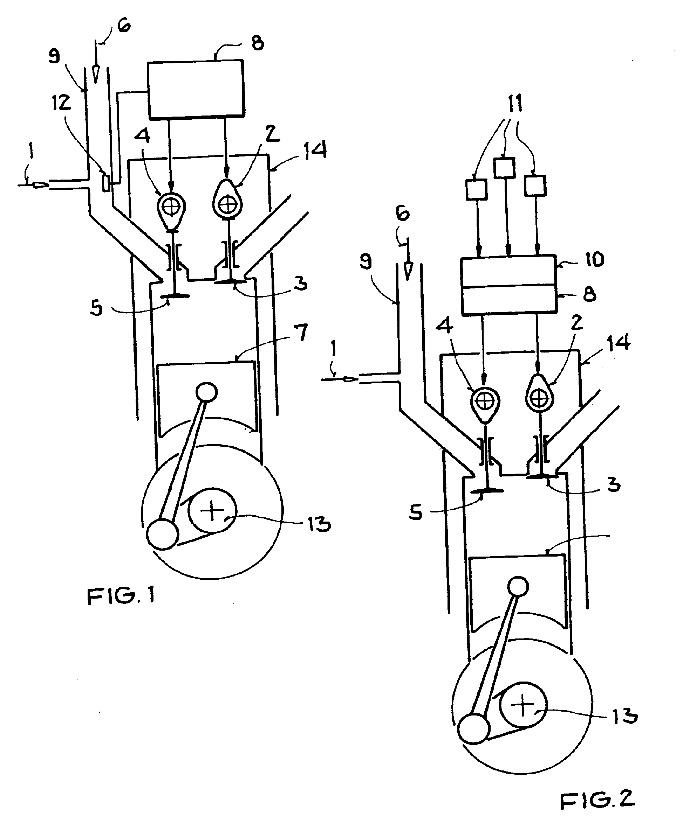

In der Figur 1 ist ein erstes Ausführungsbeispiel der Erfindung im Prinzip dargestellt.

Die Figur 1 zeigt von einem Verbrennungsmotor eines Kraftfahrzeugs den Zylinderkopf 14, eine Einlassnockenwelle 4, eine Auslassnockenwelle 2, einen Kolben 7, eine Kurbelwelle 13 und ein Saugrohr 9, in dem an einer vorgebbaren Stelle ein Temperaturfühler 12 angeordnet ist. In das Frischluft 6 ansaugende Saugrohr 9 wird Abgas 1 eingespeist.

Der Temperaturfühler 12 liefert die gemessene Temperatur an eine Steuer- oder Regeleinrichtung 8, der durch Verstellung der Einlassnockenwelle 4 oder der Auslassnockenwelle 2 oder beider Nockenwellen 2 und 4 die Menge des rückgeführten Abgases 1 so steuert oder regelt, dass die Temperatur an der vorgebbaren Stelle im Saugrohr 9 möglichst genau auf eine Grenztemperatur, insbesondere einen vorgegebenen Höchstwert, geregelt wird. Durch diese erfindungsgemäße Maßnahme wird für jede an der vorgebbaren Stelle im Saugrohr 9 herrschende Temperatur die größtmögliche Abgasrückführung zur Minimierung des Kraftstoffverbrauchs bewirkt und die Grenztemperatur ist so gewählt, dass das Material des Saugrohrs 9 der Temperatur standhält. Als Material wird bevorzugt Kunststoff verwendet.

In der Figur 2 ist ein zweites Ausführungsbeispiel der Erfindung im Prinzip dargestellt.

Das zweite Ausführungsbeispiel unterscheidet sich vom in der Figur 1 gezeigten dadurch, dass anstelle des Temperaturfühlers im Saugrohr 9 mindestens ein, insbesondere mehrere Messfühler 11 vorgesehen ist/sind, die n Messwerte aufnehmen wie z. B. der Druck und die Temperatur des Gasgemisches aus Ansaugluft und rückgeführtem Abgas, die Motortemperatur, die Außentemperatur, die im Betriebspunkt gefahrene Restgasmenge, die Zeitdauer des Betriebspunktes, die Fahrgeschwindigkeit des Kraftfahrzeuges, die Motordrehzahl und/oder die Motorlast.

Aus den von den n Messfühlern 11 gelieferten n Messwerten berechnet eine Recheneinheit, vorzugsweise ein Steuergerät 10, wie es üblicherweise bei Verbrennungsmotoren mit Abgasrückführung eingesetzt wird, mittels eines Rechenmodells die an der vorgebbaren Stelle im Saugrohr 9 herrschende Temperatur, die (anstelle der gemessenen Temperatur gemäß Figur 1) der Steuer- oder Regeleinrichtung 8 zugeführt wird. Die Steuer- oder Regeleinrichtung 8 steuert oder regelt nun ebenso wie beim ersten in der Figur 1 abgebildeten Ausführungsbeispiel durch Verstellung der Einlassnockenwelle 4 und/oder der Auslassnockenwelle 2 die Menge des rückgeführten Abgases 1 so, dass nun anstelle der gemessenen Temperatur die vom Steuergerät 10 berechnete Temperatur möglichst genau auf die Grenztemperatur geregelt wird. Der einzige Unterschied zwischen dem ersten und zweiten Ausführungsbeispiel der Erfindung liegt darin, dass der Steuer- oder Regeleinrichtung 8 als Istgröße anstelle einer gemessenen Temperatur eine berechnete Istgröße zugeführt wird.

Das zweite Ausführungsbeispiel zeichnet sich durch den Vorteil aus, dass die ohnehin bei einem Verbrennungsmotor mit Abgasrückführung vorhandenen Messfühler - die n Messfühler 11 - Messwerte liefern, aus denen das ohnehin bei einem Verbrennungsmotor mit Abgasrückführung vorhandene Steuergerät 10 oder eine separate Recheneinheit in vorteilhafter Weise mittels eines Rechenmodells die Temperatur an der vorgebbaren Stelle im Saugrohr 9 berechnet. Es ist daher kein zusätzlicher Temperaturfühler T erforderlich.

Die Erfindung ist sowohl für Otto- wie auch Dieselmotoren geeignet. Besonders vorteilhaft lässt sich die Erfindung in Kraftfahrzeugen zur Reduktion der Abgasemissionen und des Kraftstoffverbrauchs einsetzen, ohne dass Saugrohre aus teuren Metalllegierungen erforderlich sind.

### BEZUGSZEICHENLISTE

- 1: rückgeführtes Abgas
- 2: Auslassnockenwelle
- 3: Auslassventil
- 4: Einlassnockenwelle
- 5: Einlassventil
- 6: Frischluft
- 7: Kolben
- 8: Steuer- oder Regeleinrichtung
- 9: Saugrohr
- 10: Steuergerät
- 11: Messfühler
- 12: Temperaturfühler
- 13: Kurbelwelle
- 14: Zylinderkopf

## Patentansprüche

1. Verfahren zum Schutz temperaturempfindlicher Bauteile vor Überhitzung im Ansaugbereich eines Verbrennungsmotors mit Abgasrückführung für ein Kraftfahrzeug, **dadurch gekennzeichnet, dass** eine Temperaturmessung an mindestens einer vorgebbaren Stelle eines Bauteils im Ansaugbereich erfolgt und/oder dass eine Berechnung der an mindestens einer vorgebbaren Stelle eines Bauteils im Ansaugbereich herrschenden Temperatur mittels eines Rechenmodells durchgeführt wird, und dass die Menge des rückgeführten Abgases (1) so eingestellt wird, dass die gemessene und/oder berechnete Temperatur an der vorgebbaren Stelle einen vorgebbaren Höchstwert nicht überschreitet.

2. Verfahren nach Anspruch 1, **dadurch gekennzeichnet, dass** die Temperatur an der Stelle gemessen und/oder für die Stelle berechnet wird, an der eine relativ hohe oder die höchste Temperatur auftritt.

3. Verfahren nach einem der vorangehenden Ansprüche, **dadurch gekennzeichnet, dass** die Menge des rückgeführten Abgases (1) so eingestellt wird, dass die gemessene oder berechnete Temperatur auf einen vorgebbaren Wert, insbesondere den Höchstwert, gesteuert oder geregelt wird.

4. Verfahren nach einem der vorangehenden Ansprüche, **dadurch gekennzeichnet, dass** die vorgebbare Stelle zur Temperaturmessung oder -berechnung im Saugrohr (9) liegend gewählt wird.

5. Verfahren nach einem der vorangehenden Ansprüche, **dadurch gekennzeichnet, dass** zur Berechnung der Temperatur an der vorgebbaren Stelle mindestens ein Parameter dient.

6. Verfahren nach Anspruch 5, **dadurch gekennzeichnet, dass** als Parameter zur Berechnung der Temperatur die Motortemperatur, die Außentemperatur, die Fahrgeschwindigkeit, die Motordrehzahl, die Motorlast, die im Betriebspunkt gefahrene Restgasmenge und/oder die Zeitdauer der Beibehaltung des Betriebspunktes verwendet wird/werden.

7. Verfahren nach einem der vorangehenden Ansprüche, **dadurch gekennzeichnet, dass** die Menge des rückgeführten Abgases (1) durch Verstellung der Einlassnockenwelle (4), der Auslassnockenwelle (2) und/oder einer Drosselklappe gesteuert oder geregelt wird.

8. Vorrichtung zum Schutz temperaturempfindlicher Bauteile vor Überhitzung im Ansaugbereich eines Verbrennungsmotors mit Abgasrückführung für ein Kraftfahrzeug, **dadurch gekennzeichnet, dass** ein Temperaturfühler (12) zur Messung der Temperatur an mindestens einer vorgebbaren Stelle eines Bauteils im Ansaugbereich angeordnet ist und/oder dass eine Recheneinheit (10) zur Berechnung der an mindestens einer vorgebbaren Stelle eines Bauteils im Ansaugbereich herrschenden Temperatur mittels eines Rechenmodells vorgesehen ist und dass die Menge des rückgeführten Abgases mittels einer Steuer- oder Regeleinrichtung (8) so eingestellt ist, dass die gemessene und/oder berechnete Temperatur einen vorgebbaren Höchstwert nicht überschreitet.

9. Vorrichtung nach Anspruch 8, **dadurch gekennzeichnet, dass** die Menge des rückgeführten Abgases (1) mittels der Steuer- oder Regeleinrichtung (8) so gesteuert und/oder geregelt ist, dass die gemessene oder berechnete Temperatur auf einen vorgebbaren Wert, insbesondere den Höchstwert, gesteuert oder geregelt ist.

10. Vorrichtung nach einem der vorangehenden Ansprüche, **dadurch gekennzeichnet, dass** sich die vorgebbare Stelle zur Temperaturmessung im Saugrohr (9) befindet und/oder eine an einer vorgebbaren Stelle im Saugrohr herrschende Temperatur mittels des Rechenmodells berechnet wird.

11. Vorrichtung nach einem der vorangehenden Ansprüche, **dadurch gekennzeichnet, dass** zur Berechnung der Temperatur an der vorgebbaren Stelle mindestens ein Parameter vorgesehen ist.

12. Vorrichtung nach Anspruch 11, **dadurch gekennzeichnet, dass** als Parameter zur Berechnung der Temperatur an der vorgebbaren Stelle die Motortemperatur, die Außentemperatur, die Fahrgeschwindigkeit, die Motordrehzahl, die Motorlast, die im Betriebspunkt gefahrene Restgasmenge und/oder die Zeitdauer des Betriebspunktes vorgesehen ist/sind.

13. Vorrichtung nach einem der vorangehenden Ansprüche, **dadurch gekennzeichnet, dass** zur Berechnung der Temperatur an der vorgebbaren Stelle das ohnehin bei einem Verbrennungsmotor mit Abgasrückführung vorhandene Steuergerät (10) dient und/oder im Steuergerät vorhandene Parameter genutzt werden.

14. Vorrichtung nach einem der vorangehenden Ansprüche, **dadurch gekennzeichnet, dass** zur Bestimmung der Parameter die ohnehin bei einem Verbrennungsmotor mit Abgasrückführung vorhandenen Messfühler (11) vorgesehen sind.

15. Vorrichtung nach einem der vorangehenden Ansprüche, **dadurch gekennzeichnet, dass** sich die vorgebbare Stelle zur Messung und/oder für die Berechnung der Temperatur an einer Stelle befindet, an der eine relativ hohe oder die höchste Temperatur auftritt.

16. Vorrichtung nach einem der vorangehenden Ansprüche, **dadurch gekennzeichnet, dass** das Saugrohr (9) ein Kunststoffsaugrohr ist.

17. Vorrichtung nach einem der vorangehenden Ansprüche, **dadurch gekennzeichnet, dass** die Menge des rückgeführten Abgases (1) durch Verstellung der Einlassnockenwelle (4), der Auslassnockenwelle (2) und/oder einer Drosselklappe gesteuert oder geregelt ist.

## Claims

1. Method of protecting temperature-sensitive components against overheating in the inlet region of an internal combustion engine with exhaust gas recirculation for a motor vehicle, **characterised in that** the temperature is measured at least at one predetermined point of a component in the inlet region and/or that the temperature prevailing at least at one predetermined point of a component in the inlet region is calculated by means of a mathematical model and that the quantity of recirculated exhaust gas (1) is set in such a manner that the temperature measured and/or calculated at the predetermined point does not exceed a predetermined maximum value.

2. Method according to claim 1, **characterised in that** the temperature is measured at the point and/or calculated for the point at which a relatively high temperature or the maximum temperature occurs.

3. Method according to one of the preceding claims, **characterised in that** the quantity of recirculated exhaust gas (1) is set in such a manner that the temperature measured or calculated is controlled at a predetermined value, in particular the maximum value.

4. Method according to one of the preceding claims, **characterised in that** the predetermined point for measuring or calculating the temperature is selected so that it is situated in the inlet manifold (9).

5. Method according to one of the preceding claims, **characterised in that** at least one parameter serves to calculate the temperature at the predetermined point.

6. Method according to claim 5, **characterised in that** the engine temperature, the outside temperature, the driving speed, the engine speed, the engine load, the quantity of residual exhaust gas run at the operating point and/or the time for which the operating point is maintained is/are used as the parameter(s) for calculating the temperature.

7. Method according to one of the preceding claims, **characterised in that** the quantity of recirculated exhaust gas (1) is controlled by adjusting the inlet camshaft (4), the exhaust camshaft (2) and/or a throttle valve.

8. Device for protecting temperature-sensitive components against overheating in the inlet region of an internal combustion engine with exhaust gas recirculation for a motor vehicle, **characterised in that** a temperature sensor (12) is provided for measuring the temperature at least at one predetermined point of a component in the inlet region and/or that a calculating unit (10) is provided for calculating the temperature prevailing at least at one predetermined point of a component in the inlet region by means of a mathematical model and that the quantity of recirculated exhaust gas is set by means of a control device (8) in such a manner that the temperature measured and/or calculated does not exceed a predetermined maximum value.

9. Device according to claim 8, **characterised in that** the quantity of recirculated exhaust gas (1) is controlled by means of the control device (8) in such a manner that the temperature measured or calculated is controlled at a predetermined value, in particular the maximum value.

10. Device according to one of the preceding claims, **characterised in that** the predetermined point for measuring the temperature is situated in the inlet manifold (9) and/or the temperature prevailing at a predetermined point in the inlet manifold is calculated by means of the mathematical model.

11. Device according to one of the preceding claims, **characterised in that** at least one parameter is provided for calculating the temperature at the predetermined point.

12. Device according to claim 11, **characterised in that** the engine temperature, the outside temperature, the driving speed, the engine speed, the engine load, the quantity of residual exhaust gas run at the operating point and/or the duration of the operating point is/are provided as the parameter(s) for calculating the temperature at the predetermined point.

13. Device according to one of the preceding claims, **characterised in that** the control unit (10) present in any case in an internal combustion engine with exhaust gas recirculation serves to calculate the temperature at the predetermined point and/or parameters present in the control unit are used.

14. Device according to one of the preceding claims, **characterised in that** the sensors (11) present in any case in an internal combustion engine with exhaust gas recirculation are provided for determining the parameters.

15. Device according to one of the preceding claims, **characterised in that** the predetermined point for measuring and/or calculating the temperature is situated at a point where a relatively high temperature or the maximum temperature occurs.

16. Device according to one of the preceding claims, **characterised in that** the inlet manifold (9) is a plastic inlet manifold.

17. Device according to one of the preceding claims, **characterised in that** the quantity of recirculated exhaust gas (1) is controlled by adjusting the inlet camshaft (4), the exhaust camshaft (2) and/or a throttle valve.

## Revendications

1. Procédé de protection de composants sensibles à la température contre la surchauffe dans la zone d'admission d'un moteur à combustion interne avec recyclage des gaz d'échappement pour un véhicule automobile, **caractérisé en ce que** la température est mesurée sur au moins un endroit prédéfinissable d'un composant dans la zone d'admission et/ou **en ce qu'**un calcul de la température régnant au moins à un endroit prédéfinissable d'un composant dans la zone d'admission est réalisé au moyen d'un modèle de calcul, et **en ce que** la quantité des gaz d'échappement (1) recyclés est réglée de telle sorte que la température mesurée et/ou calculée ne dépasse pas à l'endroit prédéfinissable une valeur maximale prédéterminable.

2. Procédé selon la revendication 1, **caractérisé en ce que** la température est mesurée à l'endroit et/ou calculée pour l'endroit, auquel une température relativement élevée ou la température maximale apparaît.

3. Procédé selon l'une quelconque des revendications précédentes, **caractérisé en ce que** la quantité des gaz d'échappement (1) recyclés est réglée de telle sorte que la température mesurée ou calculée soit commandée ou réglée sur une valeur prédéterminable, en particulier la valeur maximale.

4. Procédé selon l'une quelconque des revendications précédentes, **caractérisé en ce que** l'endroit prédéfinissable pour la mesure ou le calcul de la température est choisi se trouvant dans le collecteur d'admission (9).

5. Procédé selon l'une quelconque des revendications précédentes, **caractérisé en ce qu'**au moins un paramètre sert à calculer la température à l'endroit predéfinissable.

6. Procédé selon la revendication 5, **caractérisé en ce que** la température du moteur, la température extérieure, la vitesse de marche, le régime du moteur, la charge du moteur, la quantité de gaz restante transportée au point de fonctionnement et/ou la durée de conservation du point de fonctionnement est/sont utilisés comme paramètre pour le calcul de la température.

7. Procédé selon l'une quelconque des revendications précédentes, **caractérisé en ce que** la quantité de gaz d'échappement (1) recyclés est commandée ou réglée par le réglage de l'arbre à came d'admission (4), de l'arbre à came d'échappement (2) et/ou d'un papillon des gaz.

8. Dispositif de protection de composants sensibles à la température contre la surchauffe dans la zone d'admission d'un moteur à combustion interne avec recyclage des gaz d'échappement pour un véhicule automobile, **caractérisé en ce qu'**une sonde de température (12) est disposée pour la mesure de la température à au moins un endroit prédéfinissable d'un composant dans la zone d'admission et/ou **en ce qu'**une unité de calcul (10) est prévue pour le calcul de la température régnant au moins à un endroit prédéfinissable d'un composant dans la zone d'admission au moyen d'un modèle de calcul et **en ce que** la quantité de gaz d'échappement recyclés est réglée au moyen d'un dispositif de commande ou de réglage (8) de telle sorte que la température mesurée et/ou calculée ne dépasse une valeur maximale prédéterminable.

9. Dispositif selon la revendication 8, **caractérisé en ce que** la quantité de gaz d'échappement (1) recyclés est commandée et/ou réglée au moyen du dispositif de commande ou de réglage (8) de telle sorte que la température mesurée ou calculée soit commandée ou réglée sur une valeur prédéterminable, en particulier la valeur maximale.

10. Dispositif selon l'une quelconque des revendications précédentes, **caractérisé en ce que** l'endroit prédéfinissable pour la mesure de la température se trouve dans le collecteur d'admission (9) et/ou une température régnant à un endroit prédéfinissable dans le collecteur d'admission est calculée au moyen du modèle de calcul.

11. Dispositif selon l'une quelconque des revendications précédentes, **caractérisé en ce qu'**au moins un paramètre est prévu pour le calcul de la température à l'endroit prédéfinissable.

12. Dispositif selon la revendication 11, **caractérisé en ce que** la température du moteur, la température extérieure, la vitesse de marche, le régime du moteur, la charge du moteur, la quantité de gaz restante transportée au point de fonctionnement et/ou la durée du point de fonctionnement est/sont utilisés comme paramètre pour le calcul de la température à l'endroit prédéfinissable.

13. Dispositif selon l'une quelconque des revendications précédentes, **caractérisé en ce que** l'appareil de commande (10) présent de toute façon pour un moteur à combustion interne avec recyclage des gaz d'échappement sert au calcul de la température à l'endroit prédéfinissable et/ou des paramètres présents dans l'appareil de commande sont utilisés.

14. Dispositif selon l'une quelconque des revendications précédentes, **caractérisé en ce que** les sondes (11) présentes de toute façon pour un moteur à combustion interne avec recyclage des gaz d'échappement sont prévues pour déterminer les paramètres.

15. Dispositif selon l'une quelconque des revendications précédentes, **caractérisé en ce que** l'endroit prescriptible pour la mesure et/ou le calcul de la température se trouve à un endroit, auquel une température relativement élevée ou la température maximale apparaît.

16. Dispositif selon l'une quelconque des revendications précédentes, **caractérisé en ce que** le collecteur d'admission (9) est un collecteur d'admission en matière plastique.

17. Dispositif selon l'une quelconque des revendications précédentes, **caractérisé en ce que** la quantité de gaz d'échappement (1) recyclés est commandée ou réglée par le réglage de l'arbre à came d'admission (4), de l'arbre à came d'échappement (2) et/ou d'un papillon des gaz.
